# EUROPEAN PATENT APPLICATION

(11) **EP 3 029 356 A1**
(43) Date of publication of application: **08.06.2016**
(21) Application number: 14831957.7
(22) Date of filing: 17.07.2014
(51) Int. Cl.: F16H 15/38

(54) **TOROIDAL CONTINUOUSLY VARIABLE TRANSMISSION**

(30) Priority: 02.08.2013 JP 2013161048; 07.03.2014 JP 2014045093
(71) Applicant: NSK Ltd., Tokyo 141-8560 (JP)
(72) Inventor: KITA, Masahiro, Fujisawa-shi Kanagawa 251-8501 (JP); OISHI, Yasunori, Fujisawa-shi Kanagawa 251-8501 (JP); NISHII, Hiroki, Fujisawa-shi Kanagawa 251-8501 (JP)
(74) Representative: Grünecker Patent- und Rechtsanwälte PartG mbB
(86) International application number: PCT/JP2014/069071
(87) International publication number: WO 2015/016080

(57) **Abstract**

A hydraulic pressing device (70) for pressing the input-side disc (2) in the axial direction comprises a first hydraulic chamber (75) and a second hydraulic chamber (76), and a first piston (73) that faces the first hydraulic chamber (75) and second piston (74) that faces the second hydraulic chamber (76). A lubrication hole (38) for supplying oil to the first hydraulic chamber (75) is formed on the input shaft (1) and an oil path (77) for supplying oil to the second hydraulic chamber (76) is formed in the second piston (74). Consequently, because a separate lubrication hole for supplying oil to the second hydraulic chamber (76) is not formed in the input shaft (shaft) (1), input shaft (1) production cost and labor can be reduced and because two lubrication holes do not exist on the input shaft (1) at a distance from each other in the axial direction, increased shaft length of the input shaft (1) can be limited.

## Description

### TECHNICAL FIELD

The present invention relates to a toroidal infinitely variable transmission which can be applied to transmissions for motor vehicles and various industrial machines.

### BACKGROUND ART

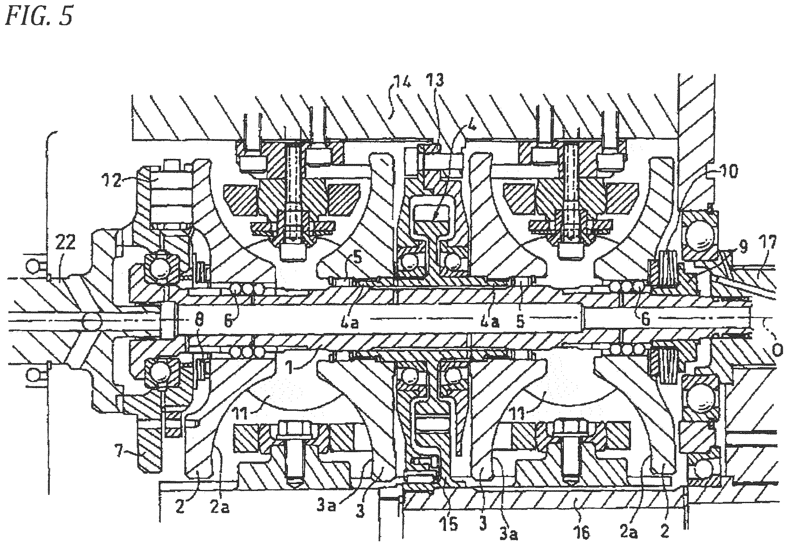

Fig. 5 shows an example of a conventional toroidal infinitely variable transmission which can be made use of as a motor vehicle transmission. This toroidal infinitely variable transmission is a so-called double cavity, high torque toroidal infinitely variable transmission which is made up of two input discs 2, 2 and two output discs 3, 3 which are mounted on an outer circumference of an input shaft 1. Additionally, an output gearwheel 4 is supported rotatably on an outer circumference of a middle portion of the input shaft 1. The output discs 3, 3 are connected through spline engagement to cylindrical flange portions 4a, 4a which are provided at a central portion of the output gearwheel 4.

The input shaft 1 is driven to rotate via a pressing unit 12 by a drive shaft 22 of an engine. The output gearwheel 4 is supported within a housing 14 via a partition wall 13 which is made up by a combination of two members, whereby the output gearwheel 4 can rotate about an axis O but is prevented from being displaced in the gearwheel 4 can rotate about an axis O but is prevented from being displaced in the direction of the axis O.

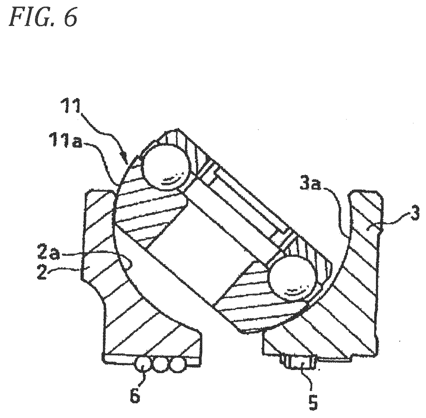

The output discs 3, 3 are supported so as to rotate about the axis O of the input shaft 1 by needle bearings 5, 5 which are interposed between the input shaft 1 and the output discs 3, 3. The input discs 2, 2 are supported so as to rotate together with the input shaft 1 via ball splines 6, 6 which lie at end portions of the input shaft 1. As shown in Fig. 6, too, power rollers 11 are held rotatably between inner surfaces (concave surfaces) 2a, 2a of the input discs 2, 2 and inner surfaces (concave surfaces) 3a, 3a of the output discs 3, 3.

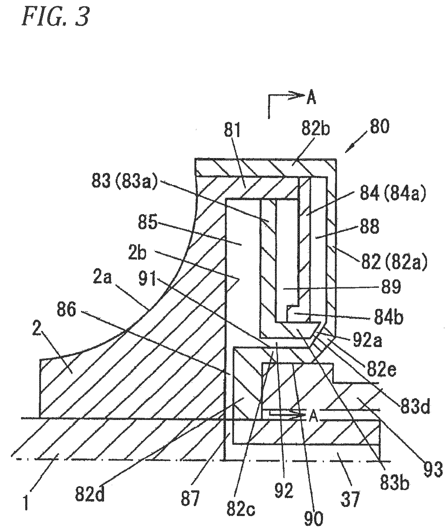

A first coned disc spring 8 is provided between the input disc 2 which is situated at a left-hand side in Fig. 5 and a cam plate 7, and a second coned disc spring 10 is provided between the input disc 2 which is situated at a right-hand side in Fig. 3 and a loading nut 9. These coned disc springs 8, 10 impart a pressing force to abutment portions between the concave surfaces 2a, 2a, 3a, 3a of the discs 2, 2, 3, 3 and circumferential surfaces (traction surfaces) 11a, 11a (refer to Fig. 6) of the power rollers 11, 11.

Consequently, in the infinitely variable transmission configured in the way described above, when a rotational force is inputted from the drive shaft 22 into the input shaft 1, the input discs 2, 2 rotate together with the input shaft 2, and the rotations of the input discs 2, 2 are transmitted to the output discs 3, 3 at a constant gear ratio by the power rollers 11, 11. Then, rotations of the output discs 3, 3 are transmitted from the output gearwheel 4 to an output shaft 17 via a transmission gearwheel 15 and a transmission shaft 16.

Incidentally, in the toroidal infinitely variable transmission, power is transmitted by means of a shearing force of oil between the input and output discs and a power roller. Because of this, a great load needs to be applied to a contact point between the input and output discs and the power roller.

As methods of imparting the load to the contact point, there are a case where the loading cam type pressing unit 12 is employed which generates mechanically a load which is proportional to inputted torque and a case where a hydraulic pressing unit is employed (for example, refer to Patent Documents 1, 2). In the case of only the loading cam type pressing unit 12 being employed, a thrust force (a pressing force of the input disc) is generated which is proportional only to the inputted torque, and therefore, depending upon a gear ratio, an excessive pressing force is exerted on the contact portion between the disc and the roller, leading to fears that the transmission efficiency is deteriorated or the durability is deteriorated. On the contrary to this, employing a hydraulic pressing unit can impart an optimum pressing force according to change in speed or gear change, oil temperature and revolution speed, and therefore, the hydraulic pressing unit can bring about a transmission with higher efficiency than that of a transmission employing the loading cam type pressing unit.

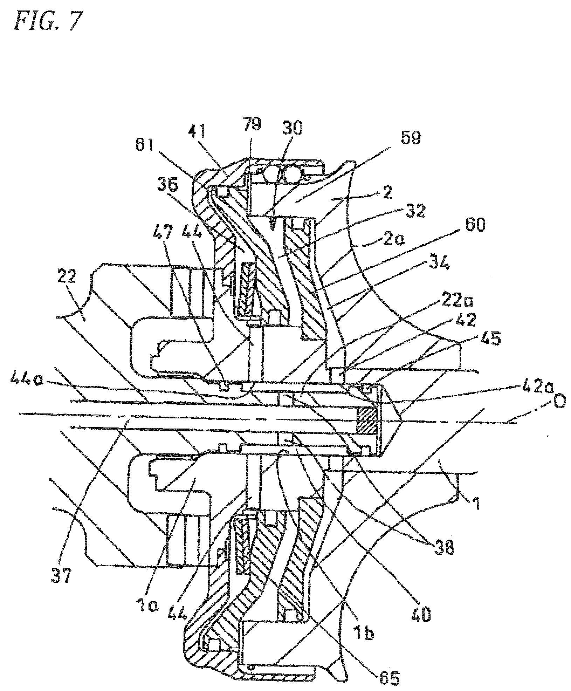

Fig. 7 shows an example of a general hydraulic pressing unit 30 which is known conventionally (like reference numerals will be given to like constituent components to those shown in Fig. 5). This pressing unit 30 has two hydraulic pressure chambers 34, 36 which are disposed on both sides of an air chamber 32 so as to hold the air chamber 32 therebetween. Oil paths are formed in the drive shaft 22 and the input shaft 1 so as to supply oil to the hydraulic pressure chambers 34, 36. Specifically, an inner bore 1b, which is coaxial with the axis O, is formed at an input end portion 1a of the input shaft 1 so as to extend along a longitudinal direction, and an extending portion 22a of the drive shaft 22 which is connected to the input shaft 1 is fittingly inserted into the inner bore 1b. An oil path 37 is formed in the extending portion 22a so as to extend along a longitudinal direction thereof, and an oil hole 38 is also formed in the extending portion 22a so as to extend in a radial direction to intersect the oil path 37 at right angles. Additionally, an annular oil groove 40 is formed on an outer circumferential surface of the extending portion 22a so as to communicate with the oil hole 38. Oil holes 42, 44 are formed radially in the input shaft 1 so as to establish a communication between the oil groove 40 and the hydraulic pressure chambers 34, 36, respectively. Seal members 45, 47 are provided on both sides of the oil groove 40 so as to be interposed between the input shaft 1 and the extending portion 22a, so that the extending portion 22a is fittingly inserted into the inner bore 1b in the input shaft 1 in a fluid tight fashion.

The pressing unit 30 includes a first cylinder portion 59 which is integral with the input disc 2, a second cylinder portion 41 which is integral with the input end portion 1a of the input shaft 1, a first annular member (a first piston) 60 and a second annular member (a second piston) 61.

A space surrounded by an inner circumferential surface of the first cylinder portion 59, the first annular member (the first piston) 60, a back surface 2b of the input disc 2 and part of an outer circumferential surface of the input shaft 1 makes up the first hydraulic pressure chamber 34. A space surrounded by an inner surface of the second cylinder portion 41, the second annular member (the second piston) 61 and part of the outer circumferential surface of the input shaft 1 makes up the second hydraulic pressure chamber 36.

A space 32 defined between the first annular member 60 and the second annular member 61 on an inner circumferential side of the first cylinder portion 59 defines an air chamber. The first cylinder portion 59 has a communication groove 79 which establishes a communication between the air chamber 32 and an exterior portion. A coned disc spring 65 is provided in the second hydraulic pressure chamber 36, and this coned disc spring 65 biases the second annular member 61 in the direction of the input disc 2.

In this configuration, when oil is supplied into the first hydraulic pressure chamber 34, the oil moves the input disc 2 in a direction in which the first annular member (the first piston) 60 and the back surface 2b of the input disc 2 move away from each other. This causes the input disc 2 to be pressed towards the output disc. On the other hand, when the oil is supplied into the second hydraulic pressure chamber 36, the oil moves the second cylinder portion 41 in a direction in which the second annular member (the second piston) 61 and the second cylinder portion 41 move away from each other. This causes the input shaft 1 which is integral with the second cylinder portion 41 to move towards the engine, whereby the opposite input disc 2 which is situated far away from the engine is pressed towards the output disc via the loading nut 9 (refer to Fig. 5). In this way, traction portions of the power rollers 11 are brought into rolling contact with both the input and output discs 2, 3, whereby the rotational driving force of the input disc 2 is transmitted to the output disc 3 at a desired speed reduction ratio.

### RELATED ART REFERENCE

### PATENT DOCUMENT

Patent Document 1: JP-A-2003-21210
Patent Document 2: JP-A-2005-127490

### SUMMARY OF THE INVENTION

### PROBLEMS TO BE SOLVED BY THE INVENTION

Incidentally, in the hydraulic pressing unit 30 of the toroidal infinitely variable transmission described above, oil holes 42, 44 are formed in the input shaft 1 to supply the oil to the first hydraulic pressure chamber 34 and the second hydraulic pressure chamber 36, causing a problem that the fabrication of the input shaft takes some cost and labor hours.

In addition, two supply ports (oil holes) 42a, 44a are provided so as to be spaced apart from each other in an axial direction in order to supply the oil from the oil path 37 into the hydraulic pressure chambers 34, 36, respectively. This inevitably extends the length of the inner bore 1b of the input shaft 1, as a result of which a problem is caused that an axial length of the input shaft 1 is increased.

Since the two supply ports (oil holes) 42a, 44a are provided in the input shaft 1, there are also concerns about the generation of excessive stress at the oil holes 42a, 44a.

The invention has been made in view of the situation described above, and an object thereof is to provide a toroidal infinitely variable transmission which can mitigate the cost and labor hours involved in fabrication of a shaft, which can suppress an increase in axial length of the shaft, and which can restrict the generation of excessive stress at an oil hole.

### MEANS FOR SOLVING THE PROBLEMS

With a view to achieving the object, according to the invention, there is provided a toroidal infinitely variable transmission including: a shaft; a first disc which is connected to the shaft so as to rotate together with the shaft; a second disc which is provided so as to face the first disc; a power roller which is held between the first disc and the second disc; and a hydraulic pressing unit which is disposed on a back side of the first disc and which presses the first disc in an axial direction, wherein:
the pressing unit includes a first hydraulic pressure chamber and a second hydraulic pressure chamber, a first piston which faces the first hydraulic pressure chamber, and a second piston which faces the second hydraulic pressure chamber;
an oil hole configured to supply oil into the first hydraulic pressure chamber is formed in the shaft; and
an oil path configured to supply oil into the second hydraulic pressure chamber is formed in the second piston.

In the invention, the oil path configured to supply the oil into the second hydraulic pressure chamber is formed in the second piston, and the oil hole configured to supply the oil into the first hydraulic pressure chamber is formed in the shaft, no separate oil hole configured to supply the oil into the second hydraulic pressure chamber being formed. Thus, the cost and labor hours involved in fabrication of the shaft can be mitigated. Additionally, two oil holes which are spaced apart from each other in the axial direction are not provided in the shaft. Thus, the increase in axial length of the shaft can be suppressed, and further, no separate oil hole is provided in the shaft which is configured to supply the oil into the second hydraulic pressure chamber. Thus, the generation of excessive stress at the oil hole can be restricted.

In the configuration of the invention, it is preferable that the oil path communicates with the oil hole.

By adopting this configuration, the oil can be supplied from the oil hole formed in the shaft directly into the oil path formed in the second piston, whereby the oil can be supplied into the second hydraulic pressure chamber easily and in an ensured fashion.

In the configuration of the invention, the oil hole in the shaft, the oil path in the second piston and another oil hole which communicates with the first hydraulic pressure chamber may be formed in the second piston.

According to this configuration, the oil can be supplied from the oil hole formed in the shaft into the first hydraulic pressure chamber through the other oil hole in an ensured fashion.

In the configuration of the invention, the second piston may have a circular disc portion which faces the second hydraulic pressure chamber and a shaft portion which is provided at a central portion of the circular disc portion so as to be concentric with the circular disc portion,
a shaft hole through which the shaft is inserted may be formed in the shaft portion and at the central portion of the circular disc portion, and
the oil path may be formed on an inner circumferential surface of the shaft hole so as to extend along an axial direction.

According to this configuration, the oil path can easily be formed in the second piston, and the oil hole formed in the shaft can easily be made to communicate with the oil path.

According to the invention, there is provided a toroidal infinitely variable transmission including: a shaft; a first disc which is connected to the shaft so as to rotate together with the shaft; a second disc which is provided so as to face the first disc; a power roller which is held between the first disc and the second disc; and a hydraulic pressing unit which is disposed on a back side of the first disc and which presses the first disc in an axial direction, wherein:
the pressing unit includes a first cylinder portion which forms a part of a first hydraulic pressure chamber, a second cylinder portion which forms a part of a second hydraulic pressure chamber, a first piston which faces the first hydraulic pressure chamber and a second piston which faces the second hydraulic pressure chamber;
the first piston includes a first cylindrical portion having a cylindrical shape at a central portion thereof;
the second cylinder portion includes a second cylindrical portion, having a cylindrical shape which is disposed concentrically inside the first cylindrical portion, at a central portion of the second cylinder portion;
an outer circumferential spline portion is provided on an outer circumferential portion of the second cylindrical portion;
an oil hole configured to supply oil into the first hydraulic pressure chamber is formed in the shaft; and
a space defined between an inner circumferential surface of the first cylindrical portion and the outer circumferential spline portion is made into an oil path configured to supply oil into the second hydraulic pressure chamber.

In this invention, the space defined between the inner circumferential surface of the first cylindrical portion and the outer circumferential spline portion is made into the oil path configured to supply the oil into the second hydraulic pressure chamber, and the oil hole configured to supply the oil into the first hydraulic pressure chamber is formed in the shaft, no separate oil hole configured to supply the oil into the second hydraulic pressure chamber being formed. Thus, the cost and labor hours involved in fabrication of the shaft can be mitigated. Additionally, two oil holes which are spaced apart from each other in the axial direction are not provided in the shaft. Thus, the increase in axial length of the shaft can be suppressed, and further, no separate oil hole is provided in the shaft which is configured to supply the oil into the second hydraulic pressure chamber. Thus, the generation of excessive stress at the oil hole can be restricted.

According to the invention, there is provided a toroidal infinitely variable transmission including: a shaft; a first disc which is connected to the shaft so as to rotate together with the shaft; a second disc which is provided so as to face the first disc; a power roller which is held between the first disc and the second disc; and a hydraulic pressing unit which is disposed on a back side of the first disc and which presses the first disc in an axial direction, wherein:
the pressing unit includes a first hydraulic pressure chamber and a second hydraulic pressure chamber, a first piston which faces the first hydraulic pressure chamber, and a second piston which faces the second hydraulic pressure chamber;
an oil hole configured to supply oil into the first hydraulic pressure chamber and the second hydraulic pressure chamber is formed in the shaft; and
an oil path communicating with the oil hole, the first hydraulic pressure chamber and the second hydraulic pressure chamber and configured to supply oil into the first hydraulic pressure chamber and the second hydraulic pressure chamber is formed in the second piston.

In the invention, the common oil hole configured to supply the oil into the first hydraulic pressure chamber and the second hydraulic pressure chamber is formed in the shaft, and the oil path communicating with the oil hole, the first hydraulic pressure chamber and the second hydraulic pressure chamber and configured to supply the oil into the first hydraulic pressure chamber and the second hydraulic pressure chamber is formed in the second piston. Thus, the cost and labor hours involved in fabrication of the shaft can be mitigated. Additionally, two oil holes which are spaced apart from each other in the axial direction are not provided in the shaft. Thus, the axial length of the shaft can be suppressed, and further, no separate oil hole is provided in the shaft which is configured to supply the oil into the second hydraulic pressure chamber. Thus, the generation of excessive stress at the oil hole can be restricted.

### ADVANTAGE OF THE INVENTION

According to the invention, the cost and labor hours involved in fabrication of the shaft can be mitigated, the increase in axial length of the shaft can be suppressed, and the generation of excessive stress at the oil hole can be restricted.

### BRIEF DESCRIPTION OF THE DRAWINGS

Fig. 1 is a half sectional view of a main part of a toroidal infinitely variable transmission according to a first embodiment of the invention.
Fig. 2 is a perspective view showing a second piston of the toroidal infinitely variable transmission of the firs embodiment.
Fig. 3 is a half sectional view of a main part of a toroidal infinitely variable transmission according to a second embodiment of the invention.
Fig. 4 is a sectional view taken along a line A-A in Fig. 3.
Fig. 5 is a sectional view of a conventional double cavity type toroidal infinitely variable transmission.
Fig. 6 is an enlarged sectional view of the toroidal infinitely variable transmission shown in Fig. 5, which shows a state in which a power roller is provided between an input disc and an output disc in an enlarged and clear fashion.
Fig. 7 is a sectional view of the periphery of a conventional hydraulic pressing unit.

### MODES FOR CARRYING OUT THE INVENTION

Hereinafter, embodiments of the invention will be described by reference to the drawings.

The invention is characterized by a supply form for supplying oil into a hydraulic pressure chamber of a hydraulic pressing unit, and the other configurations and functions are similar to the conventional configurations and functions which are described before. Thus, in the following description, only characteristic portions of the invention will be described, and like reference numerals will be given to the other portions which are like to those described by reference to Figs. 5 to 7, so that the detailed description thereof will be omitted.

### (First Embodiment)

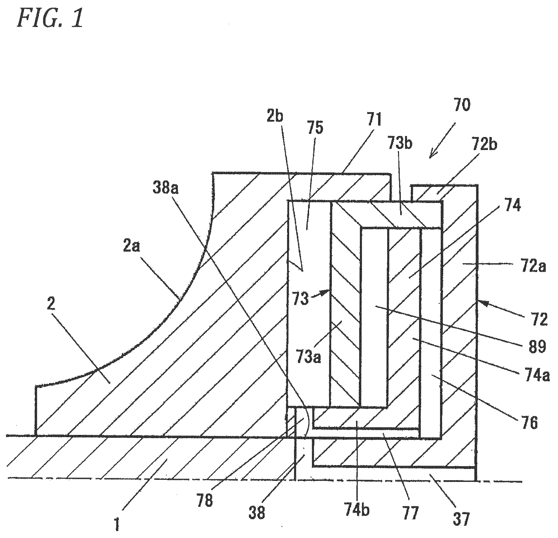

Fig. 1 shows a half sectional view of a main part (a peripheral portion of a pressing unit) of a toroidal infinitely variable transmission according to a first embodiment of the invention. The toroidal infinitely variable transmission according to this embodiment is a so-called double cavity type high torque toroidal infinitely variable transmission and is made up of two input discs 2 and two output discs (refer to Fig. 3) which are mounted on an outer circumference of an input shaft (a shaft) 1 (in Fig. 1, only an input disc (a first disc) 2 is shown which lies on an input side into which power is inputted from an engine (a prime mover)). A power roller is held between the input disc 2 and the output disc (a second disc), and this power roller transmits a rotational force of the input disc 2 to the output disc at a predetermined gear ratio. As with a conventional configuration shown in Fig. 5, an output gearwheel is supported rotatably on an outer circumference of a middle portion of the input shaft 1. The output discs are connected through spline engagement to cylindrical flange portions which are provided at a central portion of the output gearwheel. The configuration of a power output side is similar to the configuration shown in Fig. 5, and therefore, the description thereof will be omitted.

A power transmitting portion (not shown) as a connecting portion is provided between the input shaft 1 and an engine side drive shaft (not shown), and a rotational force is inputted from the engine side drive shaft into the input shaft 1 via the power transmitting portion.

A hydraulic pressing unit 70, which is configured to press the input disc 2 in an axial direction, is provided on a back surface 2b of the input disc 2 (the input disc 2 shown in Fig. 1) which is positioned at an input side of the input shaft 1.

This pressing unit 70 includes a first cylinder portion 71 which is integral with the input disc 2, a second cylinder portion 72 which is integral with an input end portion of the input shaft 1, a first piston 73 and a second piston 74.

The first cylinder portion 71 has a circular cylindrical shape, and the first piston 73 is brought into sliding contact with an inner circumferential surface of the first cylinder portion 71 so as to slide in an axial direction of the input shaft 1. The first piston 73 has a circular disc portion 73a and a cylindrical portion 73b having a circular cylindrical shape which is formed integral with an outer circumferential portion of the circular disc portion 73 and concentric with the circular disc portion 73a. Then, an outer circumferential surface of the cylindrical portion 73b is in sliding contact with the inner circumferential surface of the first cylinder portion 71. A space surrounded by the circular disc portion 73a of the first piston 73, the inner circumferential surface of the first cylinder portion 71, the back surface 2b of the input disc 2 and a shaft portion 74b of a second piston 74, which will be described later, makes up a first hydraulic pressure chamber 75, and the circular disc portion 73a of the first piston 73 faces the first hydraulic pressure chamber 75.

The second cylinder portion 72 includes a circular disc portion 72a which is formed concentric and integral with the input shaft 1 at the end portion of the input shaft 1, and a substantially cylindrical flange portion 72b is formed concentric with the circular disc portion 72a on an outer circumferential portion of the circular disc portion 72a. An outer circumferential surface of the cylindrical portion 73 b of the first piston 73 is brought into sliding contact with an inner circumferential surface of the flange portion 72b so as to slide freely in the axial direction of the input shaft 1.

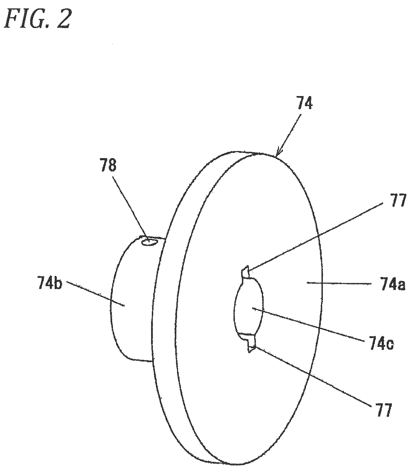

As shown in Fig. 2, the second piston 74 has a circular disc portion 74a and the shaft portion 74b which is provided at a central portion of the circular disc portion 74a concentrically with the circular disc portion 74a. A shaft hole 74c, through which the input shaft 1 is inserted, is formed in the shaft portion 74b and a central portion of the circular disc portion 74a. The input shaft 1 is inserted through the shaft hole 74c so as to slide freely in the axial direction. Additionally, an end portion of the shaft portion 74b of the second piston 74 is brought into abutment with the back surface 2b of the input disc 2.

In addition, an outer circumferential surface of the circular disc portion 74a of the second piston 74 is brought into sliding contact with an inner circumferential surface of the cylindrical portion 73b of the first piston 73 so as to slide freely in the axial direction of the input shaft 1. Further, the shaft portion 74b of the second piston 74 is inserted through a hole formed in a central portion of the circular disc portion 73a of the first piston 73 so as to slide freely in the axial direction of the input shaft 1.

Then, a space surrounded by the circular disc portion 72a of the second cylinder portion 72, the outer circumferential surface of the input shaft 1, the circular disc portion 74a of the second piston 74 and the cylindrical portion 73b of the first piston 73 makes up a second hydraulic pressure chamber 76, and the circular disc portion 74a of the second piston 74 faces the second hydraulic pressure chamber 76.

Oil paths 77, 77 confront radially an inner circumferential surfaces of the shaft hole 74c formed in the second piston 74 and are formed along an axial direction of the second piston 74.

On the other hand, an oil path 37 and an oil hole 38 are formed in the input shaft 1. The oil path 37 extends along a longitudinal direction of the input shaft 1, and the oil hole 38 extends in a radial direction so as to intersect the oil path 37 at right angles. There are two oil holes 38, and these oil holes 38 extend straight from the oil path 37 in the radial direction. Supply ports 38a of these oil holes 38 are opened to the outer circumferential surface of the input shaft 1.

In addition, other oil holes 78, 78 are formed in the shaft portion 74b of the second piston 74 so as to extend in the radial direction to intersect the oil paths 77, 77 at right angles. These other oil holes 78, 78 communicate with the oil paths 77, 77 at end portions of the oil paths 77, 77.

The other oil holes 78 are provided coaxially with the oil holes 38 formed in the input shaft 1 and have the same diameter as that of the oil holes 38. These oil holes 78, 38 communicate with each other. Consequently, the oil paths 77 communicate with the oil holes 38 by way of the other oil holes 78.

Then, oil flowing through the oil path 37 is supplied from the oil holes 38 into the first hydraulic pressure chamber 75 through the other oil holes 78, while being supplied into the second hydraulic pressure chamber 76 through the other oil holes 78 and the oil paths 77.

An air chamber 89 is formed between the circular disc portion 73a and the cylindrical portion 73b of the first piston 73 and the circular disc portion 74a and the shaft portion 74b of the second piston 74.

In the pressing unit 70 configured in the way described above, when the oil is supplied into the first hydraulic pressure chamber 75, the oil moves the input disc 2 in a direction in which the first piston 73 and the back surface 2b of the input disc 2 move away from each other. This presses the input disc 2 towards the output disc 3.

On the other hand, when the oil is supplied into the second hydraulic pressure chamber 76, the oil moves the second cylinder portion 72 in a direction in which the second piston 74 and the second cylinder portion 72 move away from each other. This moves the input shaft 1 which is integral with the second cylinder portion 72 towards the engine (to the right in Fig. 1), whereby the opposite input disc 2 which lies far away from the engine is pressed towards the corresponding output disc via the loading nut 9 (refer to Fig. 5). In this way, the traction portions of the power rollers are brought into rolling contact with both the input and output discs 2, 3, whereby the rotational driving forces of the input discs 2 are transmitted to the output discs 3 at a desired speed reduction ratio.

Thus, as has been described heretofore, according to the toroidal infinitely variable transmission, the oil paths 77, which are configured to supply the oil into the second hydraulic pressure chamber 76, are formed in the second piston 74, and the oil holes 38, which are configured to supply the oil into the first hydraulic pressure chamber 75, are formed in the input shaft 1, no separate oil hole configured to supply the oil into the second hydraulic pressure chamber 76 being formed. Thus, it is possible to reduce the cost and labor hours involved in fabrication of the input shaft 1 accordingly. In addition, no two oil holes lying apart from each other in the axial direction exist in the input shaft 1, whereby it is possible to suppress the increase in axial length of the input shaft 1. Further, no separate oil hole configured to supply the oil into the second hydraulic pressure chamber 76 exists in the input shaft 1, and therefore, it is possible to restrict the generation of excessive stress at the oil hole.

The oil paths 77 formed in the second piston 74 communicate with the oil holes 38 by way of the other oil holes 78, and therefore, the oil can be supplied into the oil paths 77 from the oil holes 38 formed in the input shaft 1. Consequently, the oil can be supplied into the second hydraulic pressure chamber 76 easily and in an ensured fashion.

Further, the second piston 74 has the circular disc portion 74a which faces the second hydraulic pressure chamber 76 and the shaft portion 74b which is provided coaxially with the circular disc portion 74a at the central portion of the circular disc portion 74a. Then, the shaft hole 74c is formed in the shaft portion 74b and in the central portion of the circular disc portion 74a so that the input shaft 1 is inserted through the shaft hole 74c. In addition, the oil paths 77 are formed on the inner circumferential surface of the shaft hole 74c along the axial direction. Thus, the oil paths 77 can easily be formed in the second piston 74, and the oil holes 38 formed in the input shaft 1 can easily be caused to communicate with the oil paths 77.

In addition, the other oil holes 78 formed in the shaft portion 74b of the second piston 74 communicate with the oil holes 38 formed in the input shaft 1, and the oil holes 78 communicate with the first hydraulic pressure chamber 75. Thus, the oil flowing through the oil path 37 can be supplied into the first hydraulic pressure chamber 75 through the oil holes 38 and other oil holes 78 in an ensured fashion.

In this embodiment, the oil paths 77 formed in the second piston 74 communicate with the oil holes 38 by way of the other oil holes. However, the oil paths 77 may communicate directly with the oil holes 38. As this occurs, for example, the diameter of the oil holes 38 is increased, so that portions of the oil holes 38 communicate with the oil paths 77.

As a further modified example, the oil holes 38 may be formed in positions facing the oil paths 77 or may be formed in positions facing the second hydraulic pressure chamber 76. This can serve to shorten the oil path 37.

### (Second Embodiment)

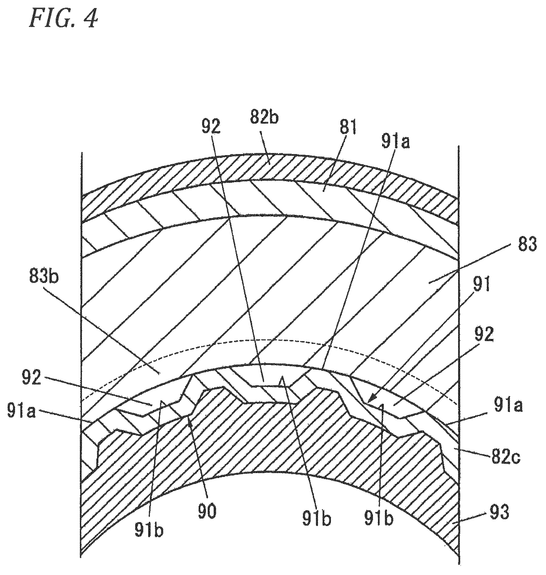

Fig. 3 is a half sectional view of a main part (a peripheral portion of a pressing unit) of a toroidal infinitely variable transmission according to a second embodiment of the invention, and Fig. 4 is a sectional view taken along a line A-A in Fig. 3. The toroidal infinitely variable transmission according to this embodiment is a double cavity type high torque toroidal infinitely variable transmission similar to that of the first embodiment. This embodiment differs from the first embodiment only in the configuration of a pressing unit 80. Hereinafter, the different feature will be described while imparting like reference numerals to constituent portions of the second embodiment which are common for those of the first embodiment, so that the description thereof will be omitted or simplified.

A pressing unit 80 is provided on a back surface 2b of an input disc 2 (an input disc 2 shown in Fig. 3) which is positioned at an input side of an input shaft (shaft) 1, and this pressing unit 80 presses the input disc 2 in an axial direction.

This pressing unit 80 includes a first cylinder portion 81 which is integral with the input disc (a first disc) 2, a second cylinder portion 82 which is integral with an input end portion of the input shaft 1, a first piston 83, and a second piston 84.

The first cylinder portion 81 has a cylindrical shape, and a first piston 83 is brought into sliding contact with an inner circumferential surface of the first cylinder portion 81 so as to slide freely in an axial direction of the input shaft 1. The first piston 83 has a circular disc portion 83a and a first cylindrical portion 83b having a cylindrical shape which is formed integral with an inner circumferential portion of the circular disc portion 83a and coaxial with the circular disc portion 83a. An outer circumferential surface of the circular disc portion 83a is brought into sliding contact with an inner circumferential surface of the first cylinder portion 81. A space surrounded by the circular disc portion 83a of the first piston 83, the inner circumferential surface of the first cylinder portion 81, the back surface 2b of the input disc 2 and part of an outer circumferential surface of a second cylindrical portion 82c, having a cylindrical shape, of the second cylinder portion 82 makes up a first hydraulic pressure chamber 85. The circular disc portion 83a of the first piston 83 faces the first hydraulic pressure chamber 85.

The second cylinder portion 82 is made up of a circular disc portion 82a, a cylindrical portion 82b having a cylindrical shape which is provided on an outer circumferential portion of the circular disk portion 82a coaxially and integrally with the circular disc portion 82a, a second cylindrical portion 82c which is provided on an inner circumferential portion of the circular disc portion 82a coaxially and integrally with the circular disc portion 82a and a circular disc portion 82d which is provided at an end portion of the second cylindrical portion 82c coaxially and integral with the second cylindrical portion 82c and which provided integrally with the input shaft 1 or fixed to the input shaft 1.

The cylindrical portion 82b extends from the outer circumferential portion of the circular disc portion 82a towards the input disc 2. An outer circumferential surface of the first cylinder portion 81 and an outer circumferential surface of the second piston 84 are brought into sliding contact with an inner circumferential surface of the cylindrical portion 82b so as to slide freely in the axial direction of the input shaft 1. An outer circumferential portion of a side surface of the second piston 84 which faces the input disc 2 is brought into abutment with an end face of the first cylinder portion 81.

The second cylindrical portion 82c and the circular disc portion 82a are connected integrally to each other by an inclined wall portion 82e, and the second cylindrical portion 82c extends from an end portion of the inclined wall portion 82e towards the input disc 2 (the first disc).

Additionally, an extending end portion of the second cylindrical portion 82c is connected integrally to the outer circumferential portion of the circular disc portion 82d. An oil path 86 is provided between a surface of the circular disc portion 82d which faces the input disc 2 and the back surface 2b of the input disc 2, and this oil path 86 communicates with an oil hole 87 which is provided in the input shaft 1.

An oil hole 87 and an oil hole which communicates with the first hydraulic pressure chamber 85 may be formed in the circular disc portion 82d in place of the oil path 86.

The oil hole 87 extends from an end portion of an oil path 37 which is provided in an axial core portion of the input shaft 1 so as to extend in the axial direction in a direction which intersects the axial direction of the input shaft 1 at right angles to thereby communicate with the oil path 86.

Consequently, oil supplied to the oil path 37 passes through the oil hole 87 and the oil path 86 to be supplied into the first hydraulic pressure chamber 85.

An outer circumferential surface of the first cylindrical portion 83b of the first piston 83 is in a sliding contact with an inner circumferential surface of a cylindrical portion 84b having a cylindrical shape which is provided at an inner circumferential portion of the second piston 84 so as to slide freely in the axial direction of the input shaft 1.

An outer circumferential spline portion 91, which will be described later, is brought into slicing contact with an inner circumferential surface of the first cylindrical portion 83b of the first piston 83 so as to slide freely in the axial direction of the input shaft 1.

The outer circumferential spline portion 91 is provided on an outer circumferential surface of the second cylindrical portion 82c of the second cylinder portion 82. This outer circumferential spline portion 91 is configured so that spline projecting portions 91a and spline groove portions 91b are provided alternately in a circumferential direction while extending in the axial direction of the input shaft 1.

An inner circumferential spline portion 90 is provided on an inner circumferential surface of the second cylindrical portion 82c, and this inner circumferential spline portion 90 is brought into spline engagement with an end portion of another input shaft 93.

A space between the inner circumferential surface of the first cylindrical portion 83b of the first piston 83 and the outer circumferential spline portion 91 makes up an oil path 92 which supplies oil into a second hydraulic pressure chamber 88. Namely, the space between the spline groove portions 91 b of the outer circumferential spline portion 91 and the inner circumferential surface of the first cylindrical portion 83b makes up the oil path 92.

An inclined surface 83d is formed at a distal end portion of the first cylindrical portion 83b of the first piston 83 so as to extend along a circumferential direction. A predetermined gap 92a is provided between the inclined surface 83d and an inner surface of the inclined wall portion 82e, and the oil path 92 communicates with the second hydraulic pressure chamber 88 by way of the gap 92a.

The second hydraulic pressure chamber 88 is made up of a space surrounded by the circular disc portion 84a of the second piston 84, a portion of the inner circumferential surface of the cylindrical portion 82b and the circular disc portion 82a of the second cylinder portion 82, and a portion of the outer circumferential surface of the first cylindrical portion 83b of the first piston 83. The circular disc portion 84a of the second piston 84 faces the second hydraulic pressure chamber 88.

Then, oil supplied into the oil path 37 passes through the oil hole 87, the oil path 86, the first hydraulic pressure chamber 85, the oil path 92 and the gap 92a and is then supplied into the second hydraulic pressure chamber 88.

An air chamber 89 is formed by a space defined by the circular disc portion 83a and the first cylindrical portion 83b of the first piston 83, the circular disc portion 84a of the second piston 84 and the first cylinder portion 81.

In the pressing unit 80 configured in the way described above, when oil is supplied into the first hydraulic pressure chamber 85 by way of the oil path 37, the oil hole 87 and the oil path 86, the oil moves the input disc 2 in a direction in which the first piston 83 and the back surface 2b of the input disc 2 move away from each other, whereby the input disc 2 is pressed towards the output disc.

On the other hand, when oil is supplied into the second hydraulic pressure chamber 88 by way of the oil path 37, the oil hole 87, the oil path 86, the first hydraulic pressure chamber 85, the oil path 92 and the gap 92a, the oil moves the second cylinder portion 82 in a direction in which the second piston 84 and the second cylinder portion 82 move away from each other, whereby the input cylinder 1 which is integral with the second cylinder portion 82 moves towards the engine (to the right in Fig. 3), whereby an opposite input disc 2 which is positioned far away from the engine is pressed towards the output disc through the loading nut 9 (refer to Fig. 5). In this way, traction portions of power rollers are brought into rolling contact with both the input and output discs 2, 3, whereby the rotational driving force of the input disc 2 is transmitted to the output disc 3 at a desired speed reduction ratio.

According to this embodiment, the space between the inner circumferential surface of the first cylindrical portion 83b of the first piston 83 and the outer circumferential spline portion 91 is formed into the oil path 92 which supplies the oil into the second hydraulic pressure chamber 88, and the oil hole 87 is formed in the input shaft 1 so as to supply the oil into the first hydraulic pressure chamber 85, no separate oil hole configured to supply oil into the second hydraulic pressure chamber 88 being formed in the input shaft 1. Thus, it is possible to reduce the cost and labor hours involved in fabrication of the input shaft 1. Additionally, two oil holes which are spaced apart from each other in the axial direction do not exist in the input shaft 1. Thus, it is possible to suppress the increase in axial length of the input shaft 1. Further, no separate hole configured to supply oil into the second hydraulic pressure chamber 88 exits in the input shaft 1. Thus, it is possible to restrict the generation of excessive stress at the oil hole.

The invention is not limited to the two embodiments but can be modified and/or improved as required.

For example, in the two embodiments, the pressing unit 70 or the pressing unit 80 is described as being provided on the back surface side of the input disc 2 which is connected to the input shaft 1 so as to rotate together with the input shaft 1. However, in some toroidal infinitely variable transmissions, the input and output relationship between the input disc and the output disc is reversed. Consequently, the invention can also be applied to a case where the input discs 2 and the output discs 3 are replaced by the output discs 3 and the input discs 2, respectively, in terms of position.

In the two embodiments, the invention is described as being applied to the double cavity half-toroidal infinitely variable transmission. However, in addition to this type of infinitely variable transmission, the invention can also be applied to a single cavity half-toroidal infinitely variable transmission and a full-toroidal infinitely variable transmission.

This invention is based on the Japanese Patent Application (No. 2013-161048) filed on August 2, 2013 and the Japanese Patent Application (No. 2014-045093) filed on March 7, 2014, the entire contents of which are incorporated herein by reference.

### DESCRIPTION OF REFERENCE NUMERALS AND SIGNS

1 input shaft (shaft); 2 input disc (first disc); 3 output disc (second disc); 11 power roller; 70, 80 pressing unit; 37 oil path; 38, 87 oil hole; 71, 81 first cylinder portion; 72, 82 second cylinder portion; 82c second cylindrical portion; 73, 83 first piston; 83b first cylindrical portion; 74, 84 second piston; 74a circular disc portion; 74b shaft portion; 74c shaft hole; 75, 85 first hydraulic pressure chamber; 76, 88 second hydraulic pressure chamber; 77, 92 oil path; 91 outer circumferential spline portion.

## Claims

1. A toroidal infinitely variable transmission comprising:
a shaft;
a first disc which is connected to the shaft so as to rotate together with the shaft;
a second disc which is provided so as to face the first disc, a power roller which is held between the first disc and the second disc; and
a hydraulic pressing unit which is disposed on a back side of the first disc and which presses the first disc in an axial direction, wherein:
the pressing unit includes a first hydraulic pressure chamber and a second hydraulic pressure chamber, a first piston which faces the first hydraulic pressure chamber, and a second piston which faces the second hydraulic pressure chamber;
an oil hole configured to supply oil into the first hydraulic pressure chamber is formed in the shaft; and
an oil path configured to supply oil into the second hydraulic pressure chamber is formed in the second piston.

2. The toroidal infinitely variable transmission according to Claim 1, wherein
the oil path communicates with the oil hole.

3. The toroidal infinitely variable transmission according to Claim 2, wherein
the oil hole in the shaft, the oil path in the second piston and another oil hole which communicates with the first hydraulic pressure chamber are formed in the second piston.

4. The toroidal infinitely variable transmission according to any one of Claims 1 to 3, wherein:
the second piston includes a circular disc portion which faces the second hydraulic pressure chamber and a shaft portion which is provided at a central portion of the circular disc portion so as to be concentric with the circular disc portion;
a shaft hole through which the shaft is inserted is formed in the shaft portion and at the central portion of the circular disc portion; and
the oil path is formed on an inner circumferential surface of the shaft hole so as to extend along an axial direction.

5. A toroidal infinitely variable transmission comprising:
a shaft;
a first disc which is connected to the shaft so as to rotate together with the shaft;
a second disc which is provided so as to face the first disc;
a power roller which is held between the first disc and the second disc; and
a hydraulic pressing unit which is disposed on a back side of the first disc and which presses the first disc in an axial direction, wherein:
the pressing unit includes a first cylinder portion which forms a part of a first hydraulic pressure chamber;
a second cylinder portion which forms a part of a second hydraulic pressure chamber;
a first piston which faces the first hydraulic pressure chamber and a second piston which faces the second hydraulic pressure chamber;
the first piston includes a first cylindrical portion having a cylindrical shape at a central portion thereof;
the second cylinder portion includes a second cylindrical portion, having a cylindrical shape which is disposed concentrically inside the first cylindrical portion, at a central portion of the second cylinder portion;
an outer circumferential spline portion is provided on an outer circumferential portion of the second cylindrical portion;
an oil hole configured to supply oil into the first hydraulic pressure chamber is formed in the shaft; and
a space defined between an inner circumferential surface of the first cylindrical portion and the outer circumferential spline portion is made into an oil path configured to supply oil into the second hydraulic pressure chamber.

6. A toroidal infinitely variable transmission comprising:
a shaft;
a first disc which is connected to the shaft so as to rotate together with the shaft;
a second disc which is provided so as to face the first disc;
a power roller which is held between the first disc and the second disc; and
a hydraulic pressing unit which is disposed on a back side of the first disc and which presses the first disc in an axial direction, wherein:
the pressing unit includes a first hydraulic pressure chamber and a second hydraulic pressure chamber;
a first piston which faces the first hydraulic pressure chamber, and a second piston which faces the second hydraulic pressure chamber;
an oil hole configured to supply oil into the first hydraulic pressure chamber and the second hydraulic pressure chamber is formed in the shaft; and
an oil path communicating with the oil hole, the first hydraulic pressure chamber and the second hydraulic pressure chamber and configured to supply oil into the first hydraulic pressure chamber and the second hydraulic pressure chamber is formed in the second piston.
